# DEMANDE DE BREVET EUROPEEN

(11) **EP 2 965 989 A1**
(43) Date de publication de la demande: **13.01.2016**
(21) Numéro de dépôt: 15173349.0
(22) Date de dépôt: 23.06.2015
(51) Int. Cl.: B64C 39/02

(54) **SYSTÈME DE FIXATION RAPIDE D'UN ACCESSOIRE SUR LE CORPS D'UN DRONE**

(30) Priorité: 08.07.2014 FR 1456589
(71) Demandeur: Parrot, 75010 Paris (FR)
(72) Inventeur: FARGEAU, Karim, 94220 CHARENTON LE PONT (FR); BÉNATAR, Yoni, 93260 LES LILAS (FR)
(74) Mandataire: Dupuis-Latour, Dominique

(57) **Abrégé**

Ce système de fixation rapide comprend une pièce de liaison (24) solidaire de l'accessoire (22), et un bâti support (26) formé sur le corps du drone (12). La pièce de liaison est mobile en rotation (28) par rapport au bâti entre une position libre autorisant la mise en place ou le retrait de l'accessoire, et une position verrouillée où la pièce de liaison est immobilisée en rotation et en translation sur le bâti de manière à former avec celui-ci un ensemble monobloc. II est prévu des moyens définissant la position verrouillée par une butée en rotation de la pièce de liaison par rapport au bâti, des moyens de blocage en translation axiale de la pièce de liaison par rapport au bâti lorsque la pièce de liaison est en position verrouillée, et des moyens d'attache élastique de la pièce de liaison sur le bâti une fois la position verrouillée atteinte.

## Description

L'invention concerne les drones, notamment les drones à voilure tournante tels que les quadricoptères.

Ces drones comprennent un corps de drone et une pluralité de blocs propulseurs montés à l'extrémité de bras de liaison au corps du drone, chaque bloc propulseur étant muni d'une hélice entrainée par un moteur individuel. Les différents moteurs sont commandables de manière différenciée pour piloter le drone en attitude et en vitesse.

Dans certaines configurations, il peut être intéressant de munir le drone d'un accessoire, monté sur le corps du drone de manière amovible.

Dans la suite de la description, on décrira comme exemple d'accessoire de drone un ensemble formé d'un arbre muni à chacune de ses extrémités d'une roue de grand diamètre. L'arbre est orienté transversalement par rapport à la direction principale d'évolution du drone et les roues ont un diamètre supérieur à la dimension hors-tout maximale du drone avec ses hélices. Cette configuration permet en particulier de faire non seulement voler le drone mais également, muni de ses roues, de faire rouler ce drone au sol, le long d'un mur, contre un plafond, etc., en multipliant ainsi les possibilités d'évolution, en plus des habituelles configurations de vol libre et de sustentation du drone.

Cet exemple ne doit toutefois être aucunement considéré comme limitatif, car comme on le comprendra l'invention s'applique au montage d'un très grand nombre d'accessoires sur le corps du drone.

Il peut être ainsi intéressant de munir le drone de flotteurs montés au bout de l'arbre transversal, de manière à permettre au drone de se poser sur un plan d'eau et d'évoluer sur celui-ci en toute sécurité.

Il peut également s'agir d'accessoires ne faisant pas appel à un arbre support, par exemple une caméra auxiliaire amovible montée sur le dos du drone, etc.

Dans tous les cas, il est souhaitable de pouvoir monter et démonter cet accessoire facilement, rapidement, et sans aucun outil.

Le système de fixation doit par ailleurs permettre une solidarisation complète de l'accessoire et du drone, ces deux éléments devant former un ensemble monobloc lorsque l'accessoire est verrouillé sur le corps du drone.

En particulier, dans le cas d'un arbre transversal fixé sur le drone, il est important d'empêcher toute translation axiale de l'arbre, qui pourrait entrainer un déplacement latéral des roues avec risque de venue en contact contre les hélices du drone.

Le but de l'invention est de proposer un système de fixation rapide d'un accessoire sur un corps de drone qui réponde à ces exigences de facilité d'emploi et de fiabilité de la liaison mécanique entre drone et accessoire, en particulier pour un accessoire monté transversalement au drone par l'intermédiaire d'un élément de forme tubulaire.

D'autre part, dans la mesure où l'on souhaite utiliser ce système de fixation avec des drones grand public, des jouets, etc., il convient d'utiliser un système qui puisse être aisément industrialisé en grande série et à très bas coût, tout en répondant aux critères de simplicité et de fiabilité exposés ci-dessus.

Le système de fixation rapide doit également présenter un caractère universel, c'est-à-dire qu'il doit pouvoir être utilisé pour fixer indifféremment une grande variété d'accessoires différents sur un même drone, sans nécessiter d'adaptateur ou autre élément additionnel selon que l'utilisateur souhaite monter tel ou tel accessoire sur son drone.

Divers systèmes de fixation rapide d'un organe amovible sur un drone sont par exemple décrits dans les documents WO 2014/059549 A1, US 2014/0061376 A1, EP 2 236 416 A2, WO 2008/121983 A1 ou encore US 4 591 114 A, mais aucun ne permet de répondre à l'ensemble des exigences exposées ci-dessus.

Pour atteindre les buts précités, l'invention propose à un ensemble comprenant un drone et un accessoire de drone apte à être assujetti de manière amovible sur le corps du drone, cet ensemble comprenant, comme divulgué par le WO 2014/059549 A1 précité, un système de fixation rapide de l'accessoire sur le corps de drone, comprenant une pièce de liaison solidaire de l'accessoire et un bâti support formé sur le corps de drone, ce bâti étant apte à coopérer avec la pièce de liaison pour permettre le montage, le positionnement et le maintien en place de l'accessoire sur le corps de drone.

La pièce de liaison est mobile en rotation par rapport au bâti entre une position libre, où la pièce de liaison peut être librement mise en place sur le bâti ou dissociée du bâti, et une position verrouillée, où la pièce de liaison est verrouillée en rotation et en translation sur le bâti de manière à former avec celui-ci un ensemble monobloc. La pièce de liaison comprend des moyens de butée en rotation de la pièce de liaison par rapport au bâti définissant la position verrouillée, des moyens de blocage en translation axiale de la pièce de liaison par rapport au bâti lorsque la pièce de liaison est en position verrouillée, et des moyens d'attache élastique de la pièce de liaison sur le bâti une fois la position verrouillée atteinte.

De façon caractéristique, la pièce de liaison comprend un élément tubulaire définissant au moins un tourillon apte à coopérer avec un palier homologue du bâti, ce palier étant un palier semi-cylindrique avec une ouverture tournée vers l'extérieur pour permettre la mise en place du tourillon de la pièce de liaison. La pièce de liaison comprend également un levier s'étendant perpendiculairement à l'élément tubulaire avec le tourillon disposé au voisinage du levier à l'extrémité proximale du levier

Selon diverses caractéristiques subsidiaires avantageuses :
- les moyens de butée en rotation comprennent sur le bâti une saillie formée à proximité du palier et comportant une face tournée dans une direction opposée à celle des ouvertures des paliers, et sur la pièce de liaison, une face de butée venant en contact et en appui contre la face de la saillie du bâti une fois la position verrouillée atteinte ;
- les moyens de blocage en translation axiale comprennent sur la pièce de liaison au moins un épaulement formé sur le corps tubulaire à proximité des tourillons, et sur le bâti des faces de butée prolongeant radialement le palier semi-cylindrique et venant en en appui contre l'épaulement de la pièce de liaison ;
- les moyens d'attache élastique de la pièce de liaison sur le bâti une fois la position verrouillée atteinte comprennent un bossage formé à l'extrémité distale du levier et un évidement coopérant formé dans une région homologue du bâti, ou *vice versa ;*
- le levier est élastiquement déformable sur sa longueur de manière à permettre, par une pression exercée transversalement par rapport à cette longueur, d'éloigner le bossage de l'évidement et autoriser ainsi la séparation de la pièce de liaison et du bâti et la rotation consécutive de la pièce de liaison de la position verrouillée ver la position libre ;
- l'accessoire comprend un arbre solidaire de la pièce de liaison et s'étendant axialement par rapport au corps tubulaire de part et d'autre de celui-ci, cet arbre pouvant notamment porter des roues à chacune de ses extrémités.

0

On va maintenant décrire un exemple de mise en oeuvre de l'invention, en référence aux dessins annexés où les mêmes références désignent d'une figure à l'autre des éléments identiques ou fonctionnellement semblables.
La Figure 1 est une vue d'ensemble, en perspective, d'un drone muni d'un accessoire constitué, dans l'exemple illustré, d'une paire de roues latérales.
Les Figures 2a et 2b sont des vues agrandies de la partie centrale du drone de la Figure 1 équipé de son accessoire, montrant le système de fixation rapide, respectivement dans la position initiale de mise en place de l'accessoire et dans la position finale verrouillée.
La Figure 3 montre plus en détail les éléments constitutifs du système de fixation rapide, avec la pièce de liaison et le bâti support homologue, formé sur le corps du drone.
La Figure 4 est une vue isolée de la pièce de liaison, prise sous un angle différent de celui de la Figure 3.
Les Figures 5a et 5b sont des vues de côté montrant, respectivement en position initiale et en position finale verrouillée, la pièce de liaison et le bâti support coopérant.

◊

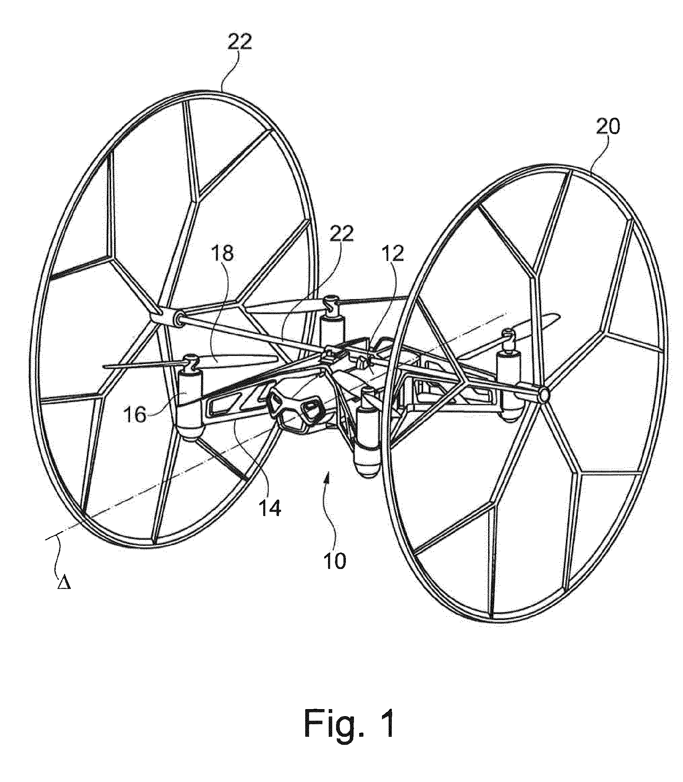

Sur la Figure 1, on a représenté un ensemble comprenant un drone 10 de type quadricoptère, avec un corps central 12 à partir duquel rayonnent quatre bras support 14. Chaque bras support 14 est équipé à son extrémité distale d'un bloc propulseur 16 comprenant un moteur entraînant en rotation une hélice 18 s'étendant dans un plan horizontal au-dessus du bras support 14.

Le drone 10 est muni d'un accessoire formé de deux roues latérales 20 de grand diamètre (diamètre supérieur à la dimension hors-tout du drone avec ses hélices), s'étendant dans des plans parallèles à la direction principale Δ d'évolution du drone, et disposées de part et d'autre du corps de drone 12 et des blocs propulseurs 16 et des hélices 18. Les roues 20 sont portées par un arbre transversal 22, qui est monté sur le corps de drone 12 de manière à être solidaire de celui-ci en translation et en rotation (c'est-à-dire que l'arbre 22 ne peut pas se déplacer axialement, ni tourner sur lui-même). Les roues 20 sont montées librement en rotation à l'extrémité de l'arbre 22, chacune des deux roues pouvant donc tourner indépendamment de l'autre et étant de ce fait purement passive. Les roues 20 n'ont pas de rôle d'entrainement, elles ne servent qu'à permettre au drone de rester à distance du sol ou d'une paroi en restant en contact avec le sol ou la paroi. Le drone, mu par la seule force de ses hélices, peut alors rouler sur ce sol ou cette paroi.

L'arbre 22 est avantageusement monté sur le dos du drone, de manière que le centre de gravité de celui-ci se trouve au-dessous de l'arbre 22, et donc au-dessous du centre de rotation des roues 20, ce qui permettra un retour naturel à l'équilibre quelles que soient les conditions de sustentation.

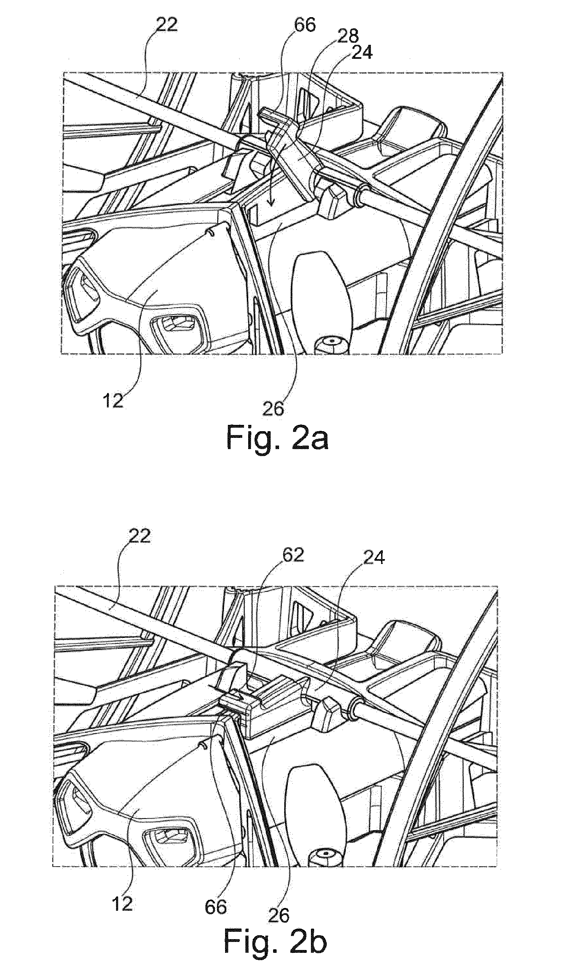

Les Figures 2a et 2b illustrent plus en détail la manière dont l'arbre 22 est monté sur le corps de drone 12.

Ce montage est réalisé au moyen d'un système de fixation rapide, caractéristique de l'invention, comprenant une pièce de liaison 24 coopérant de manière amovible avec un bâti 26 solidaire du corps de drone 12. La pièce de liaison 24 est solidaire en rotation et en translation de l'arbre 22, et elle peut être placée dans le bâti 26 (position illustrée Figure 2a). La pièce de liaison 24 peut être notamment surmoulée directement sur l'arbre 22 de manière à rendre ces deux éléments solidaires aussi bien en rotation et en translation, sans aucun degré de liberté relatif.

Le verrouillage de la pièce de liaison 24 sur le bâti 26, et donc le verrouillage de l'accessoire de drone (matérialisé en l'espèce par l'arbre 22) sur le corps de drone 12, est obtenu par rotation entre :
- une position initiale, illustrée Figure 2a, où la pièce de liaison 24 peut être librement mise en place sur le bâti 26 (ou dissociée de celui-ci), et
- une position verrouillée, illustrée Figure 2b, où la pièce de liaison 24 est bloquée en rotation et en translation sur le bâti 26 de manière à former avec celui-ci un ensemble monobloc, sans degré de liberté relatif.

Le passage de la position initiale à la position verrouillée est opéré par une simple rotation d'une fraction de tour (d'environ 60 à 90°), schématisée par la flèche 28 sur la Figure 2a. Le montage et le blocage de l'accessoire sur le corps de drone se résument donc à la mise en place de la pièce de liaison 24 sur le bâti 26 et à la rotation selon la flèche 28, sans autre manipulation nécessaire.

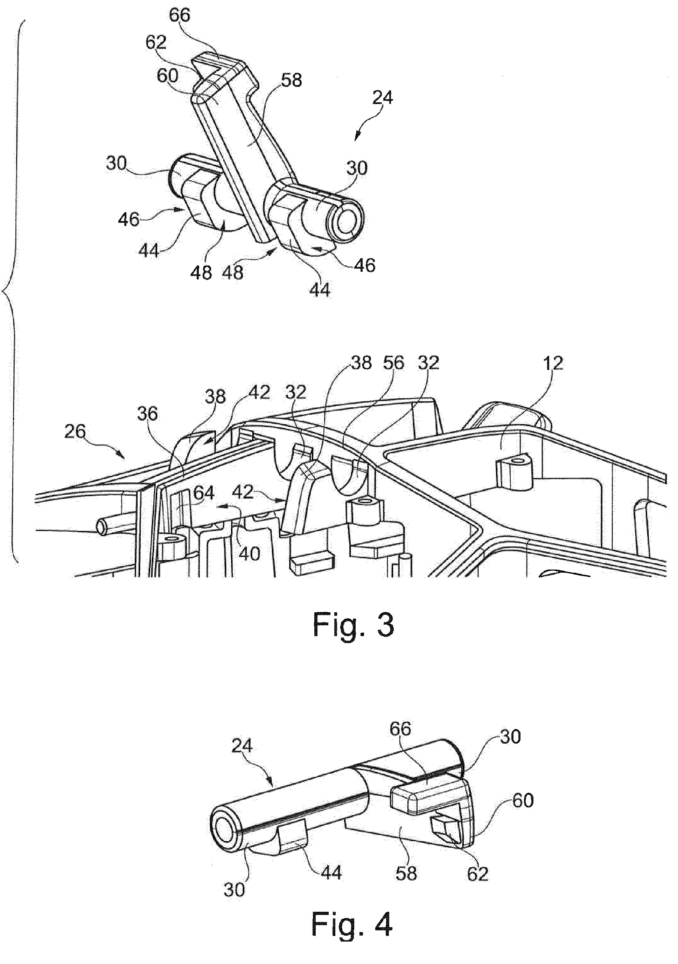

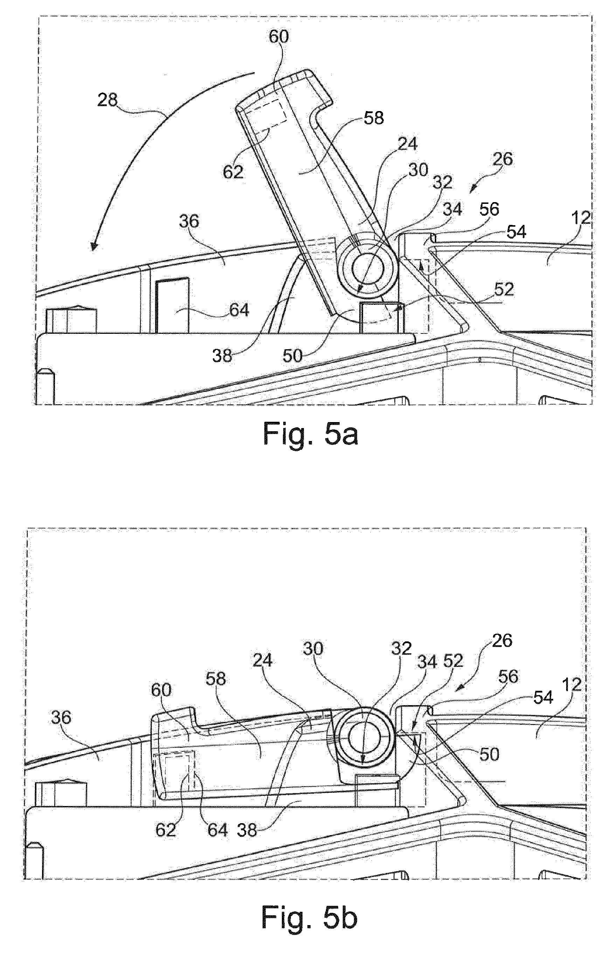

Les Figures 3 et 4, ainsi que les Figures 5a et 5b, illustrent plus en détail les éléments constitutifs de la pièce de liaison 24 et du bâti support 26 permettant d'atteindre les résultats recherchés.

La pièce de liaison 24 comprend un élément tubulaire coaxial avec l'arbre 22 (arbre non représenté sur les Figures 3 et 4), définissant deux tourillons 30 destinés à venir en appui contre des paliers homologues 32 du bâti support 26. Ces paliers 32 sont ouverts vers le haut, l'ouverture 34 (Figures 5a et 5b) étant suffisamment large pour permettre la mise en place et le retrait des tourillons 30 de la pièce de liaison 24 dans la position initiale libre (position illustrée sur les Figures 2a, 3 et 5a). Le bâti support 26 comprend également une nervure centrale 36 perpendiculaire à l'axe des tourillons 30 et deux nervures latérales 38, les paliers 32 étant formés dans les nervures 38.

La nervure centrale 36 et les nervures latérales 38 définissent deux couples de faces planes parallèles en vis-à-vis 40, 42 permettant de guider et de loger un épaulement respectif 44 formé sur le corps tubulaire de la pièce de liaison 24. Chaque épaulement 44 comporte des faces de butée 46, 48 venant en contact respectivement avec les faces 42 des nervures latérales 38 et 40 de la nervure centrale 36. Cette configuration permet, une fois que la pièce de liaison 24 a été mise en place dans le bâti support 26 avec les tourillons 30 dans les paliers 32, d'immobiliser en translation axiale la pièce de liaison 24, et donc l'arbre 22 et de façon générale l'accessoire de drone, par rapport au corps 12 du drone.

Les épaulements 44 comportent en outre, comme illustré Figures 5a et 5b, une région d'extrémité 50 se terminant par une face 52 formant face de butée, par exemple une face plane s'étendant dans un plan radial. Cette face de butée 52 est destinée à venir en contact contre une face de contact homologue en vis-à-vis 54 formée sur un rebord en saillie 56 du bâti support 26. En position initiale libre (Figure 5a) les deux faces 52 et 56 sont éloignées, et la rotation (flèche 28) vers la position verrouillée vient mettre ces faces en contact et en butée, empêchant toute sortie des tourillons 30 hors des paliers 32.

Pour maintenir la pièce de liaison 24 en position verrouillée (c'est-à-dire la position de la Figure 5b), la pièce de liaison 24 comporte un levier 58 s'étendant radialement par rapport à l'élément tubulaire portant les tourillons 30. Ce levier 58 est pourvu à son extrémité d'un bossage 62 destiné à coopérer avec un évidement homologue 64 formé dans la nervure centrale 36 du bâti support 26, le bossage 62 étant réalisé sur l'une des faces latérales du levier 58, au voisinage de son extrémité distale 60.

Du fait de l'élasticité du matériau du levier, qui est par exemple réalisé en matière plastique, l'ensemble bossage/évidement 62, 64 constitue un moyen d'attache élastique ("clipsage") résistant aux diverses sollicitations extérieures, vibrations, etc. qui pourraient solliciter la pièce de liaison 24 dans le sens de l'ouverture en l'absence de toute manoeuvre de l'utilisateur.

L'ensemble pièce de liaison/bâti support 24, 26, et donc l'ensemble corps de drone/accessoire reste ainsi parfaitement assujetti une fois que le levier 58 a été abaissé jusqu'à ce que le bossage 62 vienne se "clipser" dans l'évidement 64.

Pour démonter l'accessoire, il suffit à l'utilisateur d'exercer une sollicitation transversale sur le levier, par exemple par l'intermédiaire d'un bec 64 formé à l'extrémité 60, cette manoeuvre étant illustrée par la flèche 62 sur la Figure 2b. Cette sollicitation, du fait de l'élasticité du levier, aura pour effet d'éloigner le bossage 62 de l'évidement 64 et déverrouillera ainsi le levier 58 d'avec le bâti support 26, autorisant alors une rotation inverse de la pièce de liaison jusqu'à la position libre où l'accessoire pourra être aisément retiré.

## Revendications

1. Un ensemble comprenant :
- un drone (10) avec un corps de drone (12) ; et
- un accessoire de drone (20, 22), apte à être assujetti de manière amovible sur le corps de drone,
dans lequel il est prévu un système de fixation rapide de l'accessoire sur le corps de drone, ce système comprenant :
- une pièce de liaison (24) solidaire de l'accessoire ; et
- un bâti support (26) formé sur le corps de drone, ce bâti étant apte à coopérer avec la pièce de liaison pour permettre le montage, le positionnement et le maintien en place de l'accessoire sur le corps de drone,
la pièce de liaison étant mobile en rotation (28) par rapport au bâti entre :
une position libre, où la pièce de liaison peut être librement mise en place sur le bâti ou dissociée du bâti, et
une position verrouillée, où la pièce de liaison est verrouillée en rotation et en translation sur le bâti de manière à former avec celui-ci un ensemble monobloc,
et dans lequel la pièce de liaison comprend :
- des moyens (52, 54) de butée en rotation de la pièce de liaison par rapport au bâti, définissant la position verrouillée ;
- des moyens (40, 42, 44) de blocage en translation axiale de la pièce de liaison par rapport au bâti lorsque la pièce de liaison est en position verrouillée ; et
- des moyens (62, 64) d'attache élastique de la pièce de liaison sur le bâti une fois la position verrouillée atteinte,
**caractérisé en ce que** la pièce de liaison comprend en outre :
- un élément tubulaire définissant au moins un tourillon (30) apte à coopérer avec un palier homologue (32) du bâti, ce palier étant un palier semi-cylindrique avec une ouverture (34) tournée vers l'extérieur pour permettre la mise en place du tourillon de la pièce de liaison ;
- un levier (58) s'étendant perpendiculairement à l'élément tubulaire, le au moins un tourillon étant disposé au voisinage du levier à l'extrémité proximale du levier.

2. L'ensemble de la revendication 1, dans lequel les moyens de butée en rotation comprennent :
- sur le bâti, une saillie (56) formée à proximité du palier et comportant une face (54) tournée dans une direction opposée à celle des ouvertures (34) des paliers, et
- sur la pièce de liaison, une face de butée (52) venant en contact et en appui contre la face de la saillie du bâti une fois la position verrouillée atteinte.

3. L'ensemble de la revendication 1, dans lequel les moyens de blocage en translation axiale comprennent :
- sur la pièce de liaison, au moins un épaulement (44) formé sur le corps tubulaire à proximité des tourillons, et
- sur le bâti, des faces de butée (40, 42) prolongeant radialement le palier semi-cylindrique et venant en en appui contre l'épaulement de la pièce de liaison.

4. L'ensemble de la revendication 1, dans lequel les moyens d'attache élastique de la pièce de liaison sur le bâti une fois la position verrouillée atteinte comprennent un bossage (62) formé à l'extrémité distale (60) du levier et un évidement coopérant (64) formé dans une région homologue (36) du bâti, ou *vice versa.*

5. L'ensemble de la revendication 4, dans lequel le levier (58) est élastiquement déformable sur sa longueur de manière à permettre, par une pression (62) exercée transversalement par rapport à cette longueur, d'éloigner le bossage (62) de l'évidement (64) et autoriser ainsi :
· la séparation de la pièce de liaison et du bâti, et
· la rotation consécutive de la pièce de liaison de la position verrouillée ver la position libre.

6. L'ensemble de la revendication 1, dans lequel l'accessoire comprend un arbre (22) solidaire de la pièce de liaison (24) et s'étendant axialement par rapport au corps tubulaire de part et d'autre de celui-ci.

7. L'ensemble de la revendication 6, dans lequel l'arbre (22) porte des roues (20) à chacune de ses extrémités.
